# EUROPEAN PATENT SPECIFICATION

(11) **EP 2 062 785 B1**
(45) Date of publication and mention of the grant of the patent: **30.06.2010**
(21) Application number: 07425733.8
(22) Date of filing: 20.11.2007
(51) Int. Cl.: B60R 13/08, B60H 1/00, B29C 43/20, B62D 25/14, F16L 5/02, F16L 5/00

(54) **Gasket for the firewall of a motorvehicle**
Dichtung für die Trennwand eines Kraftfahrzeuges
Joint pour le cloison d'un véhicule automobile

(43) Date of publication of application: 27.05.2009
(73) Proprietor: DENSO THERMAL SYSTEMS S.p.A., 10046 Poirino (Torino) (IT)
(72) Inventor: Nicole', Fabrizio, 10046 Poirino (Torino) (IT)
(74) Representative: Marchitelli, Mauro

(56) References cited:
- EP-A- 1 535 771
- DE-A1-102005 047 651
- US-B1- 6 296 075

## Description

The present invention relates in general to air-treatment systems for vehicles and regards specifically an improved arrangement of installation for a gasket for the firewall of a motor vehicle.

As is known, motor vehicles are normally provided with a firewall that separates the engine compartment from the passenger compartment of the motor vehicle. An air-treatment assembly is situated in the passenger compartment and is provided with a heating radiator and an evaporator that are connected to pipes that extend through an opening in the firewall. In a position corresponding to said opening it is necessary to have available gaskets that ensure acoustic insulation and water tightness.

In the traditional solutions, a first gasket made of foamed material is provided for acoustic insulation of the area of passage of said pipes through the firewall of the vehicle, and a second gasket made of elastomeric material is provided for ensuring water tightness, such a solution being know from EP 1 535 771 A1. A vehicle showing the features of the pre-amble of claim 1 is known from DE 10 2005 047 651 A1.

The object of the present invention is to provide a simplified solution that will enable, with a single component, assurance of acoustic insulation and water tightness.

According to the present invention, said object is achieved thanks to the characteristics forming the subject of Claim 1.

The characteristics and advantages of the present invention will emerge clearly from the ensuing detailed description, which is provided purely by way of non-limiting example, with reference to the attached drawings, in which:
- Figure 1 is a perspective view of a gasket for the firewall of a vehicle according to the present invention;
- Figures 2 and 3 are sections respectively according to the lines II-II and III-III of Figure 1;
- Figure 4 is a perspective view showing the area of installation of the gasket of Figure 1 on the firewall of a vehicle;
- Figure 5 is a cross-section along the line V-V of Figure 4;
- Figure 6 is a perspective view of a second embodiment of a gasket for the firewall of a vehicle according to the present invention;
- Figures 7 and 8 are corss-sections along the lines VII-VII and VIII-VIII of Figure 6;
- Figure 9 is a perspective view showing the area of installation of the gasket of Figure 6 on the firewall of a vehicle; and
- Figure 10 is a cross-section according to the line X-X of Figure 9.

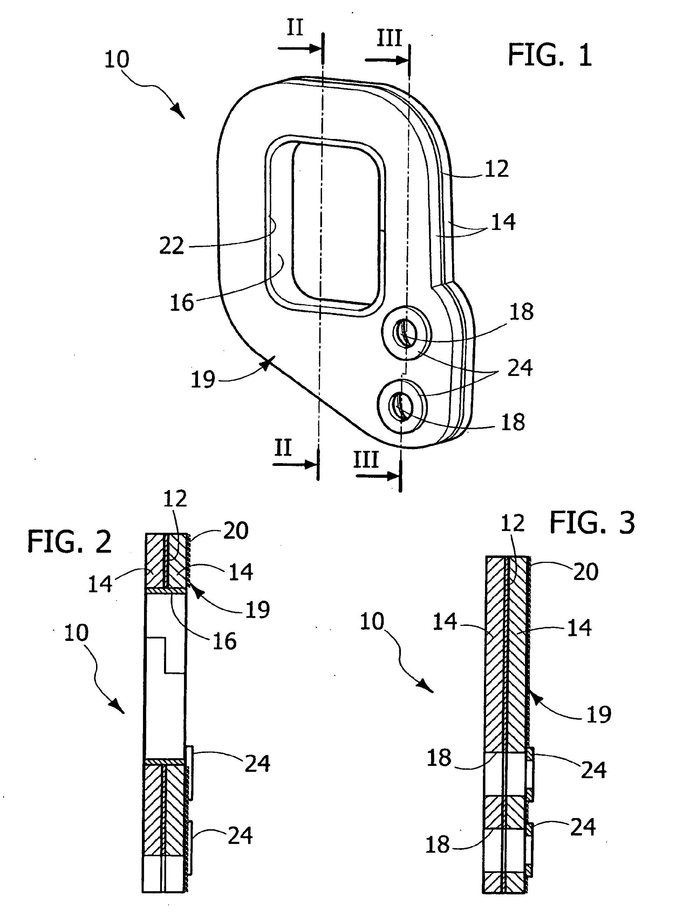

With reference to Figures 1-3, designated by 10 is a gasket for the firewall of a vehicle. The gasket 10 comprises a plate-shaped support 12 made of relatively rigid plastic material, such as for example PVC, with a thickness in the region of 1-3 mm and preferably in the region of 1.5 mm. Applied on the opposite faces of the plate-shaped support 12 are two layers 14 of sound-absorbent material, preferably open-cell foamed plastic material, such as for example foamed polyurethane. Each of the two layers 14 has a thickness comprised between 10 and 25 mm. The two layers 14 are fixed in a permanent way to the plate-shaped support 12, for example by means of adhesives.

The gasket 10 has a through opening 16, preferably quadrangular in shape, and two through holes 18, preferably with circular cross section. The gasket 10 has an external face 19, which, in use, is set facing the engine compartment of the vehicle. Applied on the face 19 is a thin layer of impermeabilizing material, designated as a whole by 20 in Figures 2 and 3, for example constituted by a polyurethane film applied by means of heat sealing. The film 20 preferably has a thickness in the region of 5-10 µm and renders the entire outer surface 19 of the gasket 10 impermeable to water.

Applied on the edge of the through opening 16 is a sealing element 22 made of impermeable material, for example a closed-cell elastomeric material, whether foamed or not, such as for example PE, EPDM, etc.

Two seal rings 24 are applied on the outer face 19 of the gasket 10 in positions corresponding to the through holes 18. The seal rings 24 are preferably disk-shaped and are glued on the outer face 19. The internal diameter of the seal rings 24 is preferably smaller than the diameter of the corresponding holes 18. Preferably, the seal rings 24 are made of the same material of which the tape 22 is made, such as for example elastomeric material of the type PE, EPDM, etc.

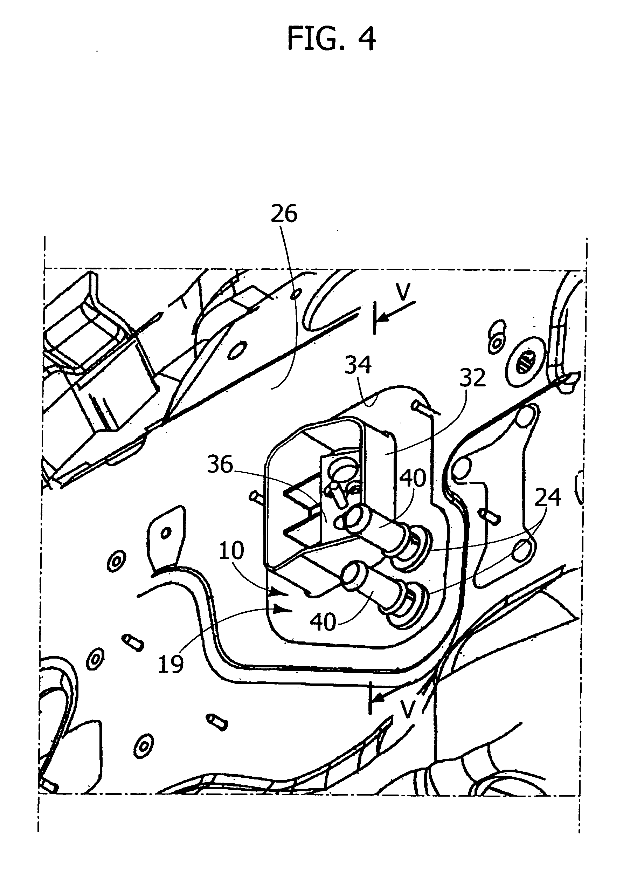

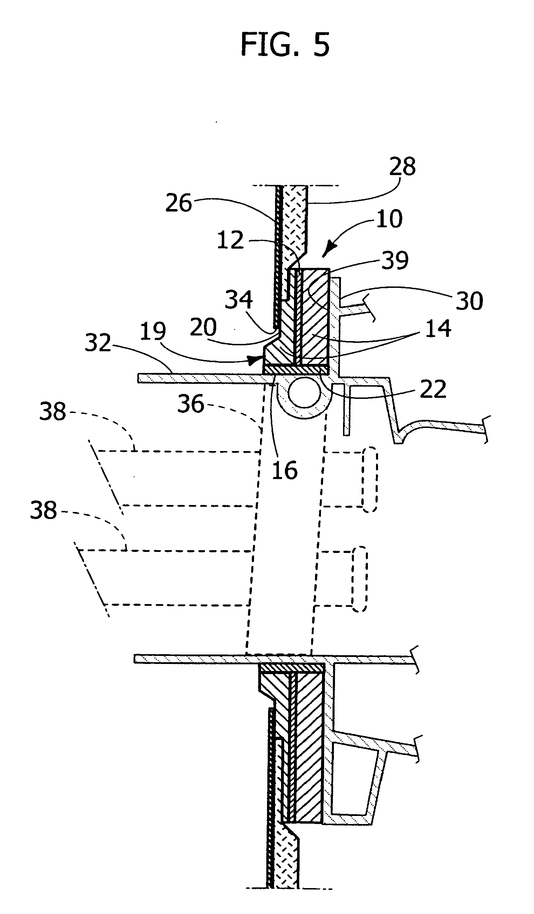

With reference to Figures 4 and 5, designated by 26 is the firewall of a vehicle. The firewall 26 is usually made of metal plate and is arranged so as to divide the engine compartment from the passenger compartment of the vehicle. A layer 28 of sound-absorbent material is applied on the face of the firewall 26 facing the passenger compartment of the vehicle.

An air-treatment assembly is mounted in the passenger compartment of the vehicle, in the proximity of the firewall 26. Designated by 30 in Figure 5 is a part of the casing of the air-treatment assembly. The air-treatment assembly is equipped, in a conventional way, with heat-exchange components for heating and cooling a flow of air. Said components are connected to pipes that extend through the firewall 26. The casing 30 of the air-treatment assembly has a tubular portion 32 with quadrangular cross section, which extends through an opening 34 in the firewall 26. Housed in the tubular portion 32 of the casing 30 is an expansion valve 36 connected to pipes 38. With reference to Figure 4, designated by 40 are two pipes connected to a heating radiator, which extends through the opening 34 of the firewall 26 on the outside with respect to the tubular portion 32 of the casing 30.

With reference to Figure 5, the gasket 10 is compressed between a wall 39 of the casing 30 and the face of the firewall 26 set facing the passenger compartment. The face 19 of the gasket 10 (the one, applied on which is the impermeabilizing film 20) is compressed against the firewall 26 around the opening 34. The impermeabilizing film 20 applied on the face 19 ensures water tightness along the edge of the opening 34.

The sealing element 22 provided on the edge of the opening 16 is compressed radially against the outer surface of the tubular portion 32 of the casing 30. The sealing element 22 ensures water tightness on the tubular portion of the casing 30 of the heat-exchange assembly.

With reference to Figure 4, the seal rings 24 are compressed on the external surfaces of the pipes 40 and ensure water tightness in the area in which said pipes traverse the opening 34 of the firewall 26.

The gasket 10 also ensures acoustic insulation through the opening 34, thanks to the layers 14 of sound-absorbent material compressed between the casing of the heat-exchange assembly and the firewall 26.

With the arrangement according to the present invention, there is hence obtained both water tightness and acoustic insulation of the opening 34 with a single component 10.

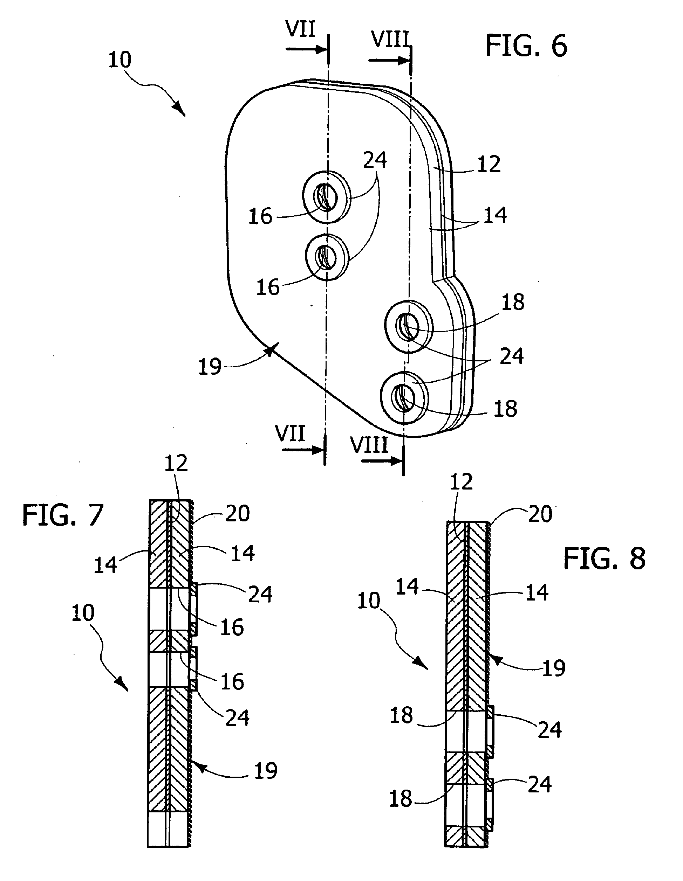

Figures 6-10 illustrate a second embodiment of the present invention. The details corresponding to the ones previously described are designated by the same reference numbers.

The gasket illustrated in Figures 6-8 differs from the gasket previously described in that, instead of presenting a relatively large opening for the seal against the outer surface of a tubular portion of the casing of the heat-exchange assembly, two pairs of holes 16, 18 are provided. Each of said holes is associated to a respective sealing disk 24 made of elastomeric material. Also in this case, a layer of impermeabilizing material 20 is applied on the face 19 of the gasket 10 set facing the engine compartment.

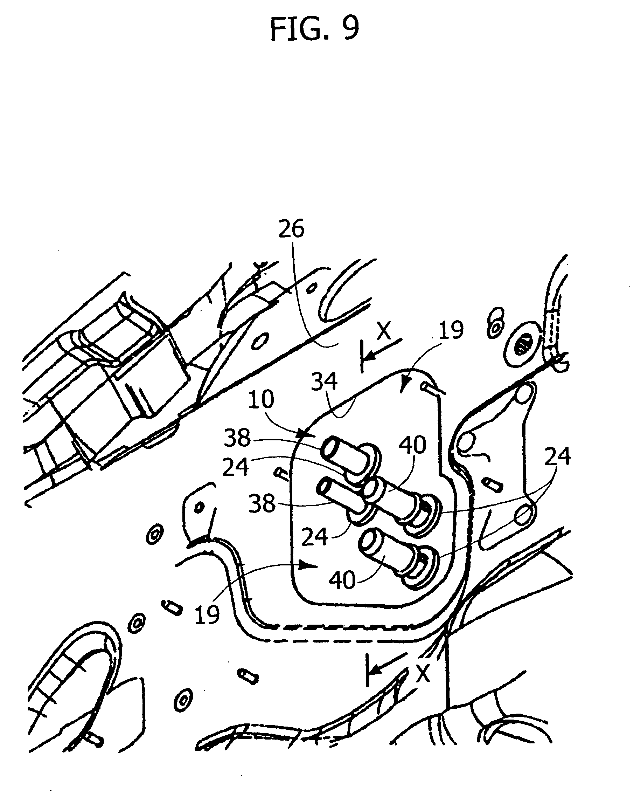

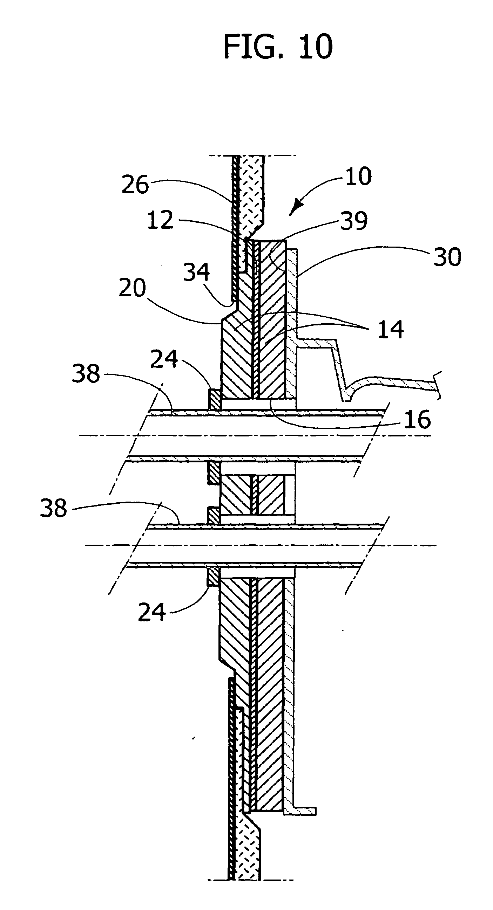

Figures 9 and 10 illustrate the gasket of Figures 6-8 mounted on the firewall 26 of a vehicle. As is illustrated in Figure 10, the gasket 10 is compressed between the wall 39 of the casing 30 of the heat-exchange assembly and the face of the firewall 26 set facing the passenger compartment. The seal rings made of elastomeric material 24 ensure water tightness against the external surfaces of the pipes 38 and 40. The film of impermeabilizing material 20 ensures water tightness against the edge of the opening 34. In this case, the expansion valve is not situated in a position corresponding to the opening 34 of the firewall 36 so that it is not necessary to provide water tightness on the housing of the expansion valve, as in the embodiment described previously.

## Claims

1. A vehicle comprising an engine compartment and a passenger compartment separated from one another by a firewall (26), and a heat-exchange assembly having a casing (30) mounted in the proximity of said firewall (26), in which the firewall (26) has a through opening (34), through which there extend pipes (38, 40) connected to heat-exchange components of said assembly, whereby the vehicle comprises a gasket (10) with first and second through openings (16, 18) provided with respective sealing elements (22, 24) for water tightness against a tubular portion (32) of said casing (30) or against external surfaces of said pipes (38, 40) **characterized in that** the gasket (10) is compressed between a wall (39) of the casing of the heat-exchange assembly and a face of the firewall (26) set facing the passenger compartment, and **in that** the gasket (10) comprises a plate-shaped support (12) made of relatively rigid plastic material and at least two layers (14) of sound-absorbent material fixed on opposite faces of said plate-shaped support (12), the gasket (10) having a face (19) facing the engine compartment, applied on which is a film (20) of impermeabilizing material that is pressed against the face of the firewall (26) facing the passenger compartment around said opening (34).

2. The vehicle according to Claim 1, **characterized in that** said gasket (10) comprises disk-shaped sealing elements (24) applied on said face (19) of the gasket (10) facing the engine compartment, said sealing elements (24) being associated to the respective through holes (18) of the gasket (10).

3. The vehicle according to Claim 1, **characterized in that** the gasket (10) comprises a substantially quadrangular through opening (16), the edge of which is coated with a sealing element (22) made of elastomeric material.

## Patentansprüche

1. Fahrzeug, mit einem Maschinenabteil und einem Passagierabteil, die voneinander durch eine Stirnwand (26) getrennt sind, und einer Wärmeaustauschbaugruppe mit einem Gehäuse (30), das in der Nähe der Stirnwand (26) befestigt ist, bei dem die Stirnwand (26) eine Durchgangsöffnung (34) aufweist, durch die sich Rohre (38, 40) erstrecken, die mit Wärmeaustauschkomponenten der Baugruppe verbunden sind, wobei das Fahrzeug eine Dichtung (10) mit ersten und zweiten Durchgangsöffnungen (16, 18) aufweist, die mit entsprechenden Dichtungselementen (22, 24) zur Wasserdichtigkeit gegen einen röhrenförmigen Abschnitt (32) des Gehäuses (30) oder gegen Außenflächen der Rohre (38, 40) versehen sind, **dadurch gekennzeichnet, dass** die Dichtung (10) zwischen eine Wand (39) des Gehäuses der Wärmeaustauschbaugruppe und eine Fläche der Stirnwand (26) gedrückt ist, welche dem Passagierabteil zugewandt festgelegt ist, und **dadurch**, dass die Dichtung (10) eine plattenförmige Stützeinrichtung (12), die aus einem relativ starren Kunststoffmaterial hergestellt ist, und wenigstens zwei Schichten (14) eines Geräusch absorbierenden Materials aufweist, die an gegenüberliegenden Flächen der plattenförmigen Stützeinrichtung (12) befestigt sind, wobei die Dichtung (10) eine Fläche (19) aufweist, die dem Maschinenabteil zugewandt ist, auf welche ein Film (20) eines undurchlässigen Materials aufgebracht ist, der um die Öffnung (34) herum gegen die dem Passagierabteil zugewandte Fläche der Stirnwand (26) gedrückt ist.

2. Fahrzeug nach Anspruch 1, **dadurch gekennzeichnet, dass** die Dichtung (10) scheibenförmige Dichtelemente (24) aufweist, die auf die Fläche (19) der Dichtung (10), die dem Maschinenabteil zugewandt ist, aufgebracht sind, wobei die Dichtelemente (24) an die jeweiligen Durchgangslöcher (18) der Dichtung (10) angeschlossen werden.

3. Fahrzeug nach Anspruch 1, **dadurch gekennzeichnet, dass** die Dichtung (10) eine im Wesentlichen viereckige Durchgangsöffnung (16) aufweist, deren Rand mit einem Dichtelement (22) beschichtet ist, das aus einem Elastomermaterial hergestellt ist.

## Revendications

1. Véhicule comprenant un compartiment de moteur et un compartiment de passagers séparés l'un de l'autre par un tablier (26) et un ensemble d'échange de chaleur ayant un carter (30) monté à proximité dudit tablier (26), dans lequel le tablier (26) a une ouverture de passage (34), à travers laquelle s'étendent des tuyaux (38, 40) raccordés aux composants d'échange de chaleur dudit ensemble, moyennant quoi le véhicule comprend un joint (10) avec des première et seconde ouvertures de passage (16, 18) prévues par rapport à des éléments d'étanchéité (22, 24) pour l'étanchéité à l'eau contre une partie tubulaire (32) dudit carter (30) ou contre des surfaces externes desdits tuyaux (38, 40), **caractérisé en ce que** le joint (10) est comprimé entre une paroi (39) du carter de l'ensemble d'échange de chaleur et une face du tablier (26) placée en face du compartiment de passagers et **en ce que** le joint (10) comprend un support en forme de plaque (12) réalisé avec une matière plastique relativement rigide et au moins deux couches (14) de matériau d'insonorisation fixées sur les faces opposées dudit support en forme de plaque (12), le joint (10) ayant une face (19) faisant face au compartiment de moteur, sur laquelle on applique un film (20) de matériau imperméabilisant qui est comprimé contre la face du tablier (26) faisant face au compartiment de passagers autour de ladite ouverture (34).

2. Véhicule selon la revendication 1, **caractérisé en ce que** ledit joint (10) comprend des éléments d'étanchéité en forme de disque (24) appliqués sur ladite face (19) du joint (10) faisant face au compartiment de moteur, lesdits éléments d'étanchéité (24) étant associés aux trous de passage (18) du joint (10).

3. Véhicule selon la revendication 1, **caractérisé en ce que** le joint (10) comprend une ouverture de passage (16) sensiblement quadrangulaire, dont le bord est recouvert avec un élément d'étanchéité (22) réalisé avec un matériau élastomère.
